# EUROPEAN PATENT APPLICATION

(11) **EP 1 975 428 A1**
(43) Date of publication of application: **01.10.2008**
(21) Application number: 08005855.5
(22) Date of filing: 27.03.2008
(51) Int. Cl.: F16C 19/20, F16C 33/32, F16C 33/34, F16C 33/64, F16C 33/37, H01J 35/10

(54) **Rolling bearing for x-ray tube and x-ray tube apparatus**

(30) Priority: 28.03.2007 JP 2007084816
(71) Applicant: JTEKT Corporation, Osaka-shi Osaka 542-8502 (JP)
(72) Inventor: Otsuka, Katsunori, Osaka-shi, Osaka 542-8502 (JP); Saito, Toshiyuki, Osaka-shi, Osaka 542-8502 (JP); Suzuki, Masahiro, Osaka-shi, Osaka 542-8502 (JP)
(74) Representative: Görz, Ingo

(57) **Abstract**

In a first rolling bearing (8) of this X-ray tube apparatus (1), an ion nitriding layer is formed on a raceway surface of an inner ring (11), and an ion nitriding layer is formed on a raceway surface of an outer ring (18). As the results, surface hardness of the raceway surface of the inner ring (11) and the raceway surface of the outer ring (18) is enhanced, and abrasion resistance can be improved. On the other hand, in a second rolling bearing (10), an ion nitriding layer and a diamond-like carbon film are successively formed on a raceway surface of an inner ring (12), and an ion nitriding layer and a diamond-like carbon film are successively formed on a raceway surface of an outer ring (20). As the results, the second rolling bearing (10) which is positioned closer to the target (3) has a double hardening structure.

## Description

### BACKGROUND OF THE INVENTION

The present invention relates to a rolling bearing for an X-ray tube and an X-ray tube apparatus provided with this rolling bearing.

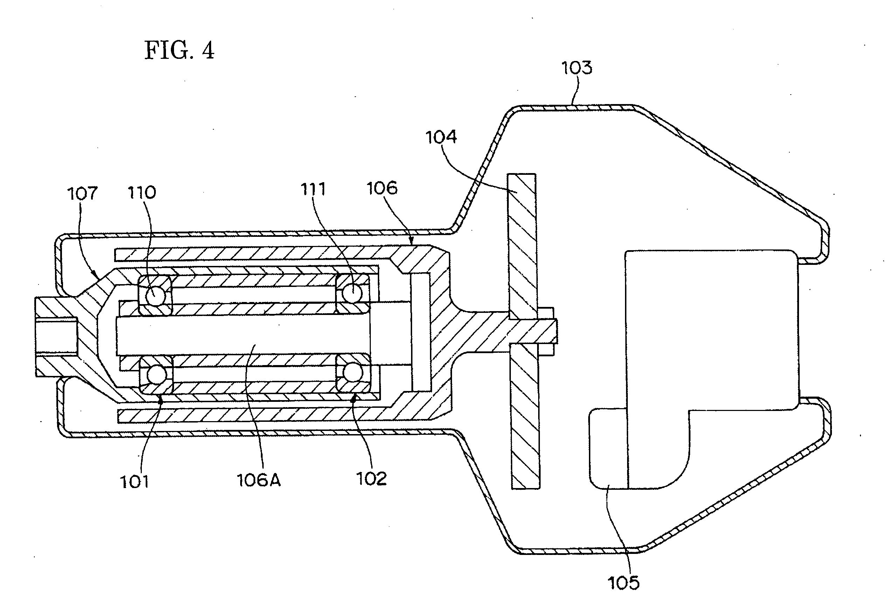

An X-ray tube apparatus in a medical X-ray CT (Computed Tomography) apparatus or the like, for example, as shown in Fig. 4, has been heretofore used. In this X-ray tube apparatus, X-rays are generated by bringing electrons issued from an electron gun 105 into collision against a target 104 at a high speed, inside an X-ray tube 103 in which vacuum (below 10⁻⁴ Pa) is maintained. See, for example, Japanese Patent Publication No. JP-A-8-31590.

This X-ray tube apparatus is provided with two rows of ball bearings 101, 102 for an X-ray tube which are arranged between a shaft part 106A of a rotary portion 106 to which the target 104 is fixed and a fixed portion 107 for supporting this rotary portion 106, in a manner spaced from each other for a determined distance in an axial direction. These ball bearings 101, 102 for the X-ray tube respectively have inner and outer rings and rolling elements 110, 111 which are formed of high speed tool steel. Moreover, it has been generally performed that a film of soft metal such as silver, copper, lead or a layer compound such as molybdenum disulfide is formed on at least either one of surfaces of the rolling elements 110, 111, raceway surfaces of the inner and outer rings, and a pocket surface of a cage, because the rolling bearings are used in atmosphere having high temperature and high vacuum.

By the way, it is considered that useful life of the bearing for the X-raytube is shortened due to wear of the raceway surfaces of the inner and outer rings or the rolling elements, and it is required to prolong the useful life of the bearing, by enhancing abrasion resistance of the raceway surfaces of the inner and outer rings and the rolling elements.

### SUMMARY OF THE INVENTION

In view of the above, it is an object of the invention to provide a rolling bearing for an X-ray tube, of which useful life can be prolonged by enhancing abrasion resistance, and an X-ray tube apparatus provided with this rolling bearing.

In order to solve the above described problem, there is provided according to the invention, a rolling bearing for an X-ray tube which is provided between a rotary portion fixed to a target in an X-ray tube and a fixed portion for supporting the rotary portion, the rolling bearing comprises:
an inner ring;
an outer ring; and
rolling elements rollably disposed between the inner and outer rings,
wherein an ion nitriding layer is formed on at least one of a raceway surface of the inner ring, a raceway surface of the outer ring, and rolling surfaces of the rolling elements.

According to the rolling bearing for the X-ray tube of this invention, the ion nitriding layer is formed on at least either one of the raceway surface of the inner ring, the raceway surface of the outer ring, and the rolling surfaces of the rolling elements. As the results, surface hardness of at least either one of the raceway surface of the inner ring, the raceway surface of the outer ring, and the rolling surfaces of the rolling elements is enhanced, whereby abrasion resistance can be improved.

Moreover, in one embodiment, there is provided An X-ray tube apparatus comprises:
a target in an X-ray tube;
a rotary portion fixed to the target;
a fixed portion for supporting the rotary portion,
a first rolling bearing which is the rolling bearing according to the above arrangement and is arranged between the rotary portion and the fixed portion; and
a second rolling bearing that is arranged spaced apart from the first rolling bearing in an axial direction thereof and between the rotary portion and the fixed portion and includes an inner ring, an outer ring, and rolling elements rollably disposed between the inner ad outer rings, in which an ion nitriding layer and a diamond-like carbon film are successively formed on at least either one of a raceway surface of the inner ring, a raceway surface of the outer ring, and rolling surfaces of the rolling elements,
wherein a distance between the first rolling bearing and the target is longer than a distance between the second rolling bearing and the target.

According to the X-ray tube apparatus in this embodiment, the second rolling bearing which is closer to the target out of the two rows of the rolling bearings has a double hardening structure including the ion nitriding layer and the diamond-like carbon film, and hence, surface hardness of the raceway surface of the inner ring, the raceway surface of the outer ring, and the rolling surfaces of the rolling elements is particularly enhanced. As the results, the abrasion resistance of the second rolling bearing which is subjected to higher temperature than the first rolling bearing, because the second rolling bearing is positioned closer to the target than the first rollingbearing, can be made higher than the abrasion resistance of the first rollingbearing. Therefore, according to this embodiment, life of the first rolling bearing and life of the second rolling bearing are balanced, and hence, the useful life of the X-ray tube apparatus can be prolonged.

Moreover, in the X-ray tube apparatus in one embodiment, at least one of the rolling elements of the first rollingbearing and the rolling elements of the second rolling bearing has electrical conductivity.

According to the X-ray tube apparatus in this embodiment, because at least one of the rolling elements has electrical conductivity, the electrical conductivity between the outer ring and the inner ring can be secured, and hence, it is possible to secure the electrical conductivity between the rotaryportion fixed to the target and the fixed portion.

Moreover, in the X-ray tube apparatus in one embodiment, at least one of the rolling elements of the first rolling bearing and the rolling elements of the second rolling bearing is formed of ceramic, and at least one of the rolling elements of the first rolling bearing and the rolling elements of the second rolling bearing is formed of steel.

According to the X-ray tube apparatus in this embodiment, decrease of the centrifugal force, reduction of noises and enhancement of burning-out resistance can be achieved with the rolling elements formed of ceramic, and at the same time, electrical conductivity between the outer rings and the inner rings can be secured with the rolling elements formed of steel. As the results, electrical conductivity between the rotary portion fixed to the target and the fixed portion can be secured.

According to the bearing for the X-ray tube of this invention, the ion nitriding layer is formed on at least either one of the raceway surface of the inner ring, the raceway surface of the outer ring, and the rolling surfaces of the rolling elements. As the results, surface hardness of at least either one of the raceway surface of the inner ring, the raceway surface of the outer ring, and the rolling surfaces of the rolling elements is enhanced, and hence, abrasion resistance can be improved.

### BRIEF DESCRIPTION OF THE DRAWINGS

Fig. 1 is a sectional view showing an X-ray tube apparatus in an embodiment according to the invention.
Fig. 2 is a sectional view of a first rolling bearing 8 as a rolling bearing for an X-ray tube which is provided in the aforesaid X-ray tube apparatus.
Fig. 3 is a sectional view of a second rolling bearing 10 as a rolling bearing for an X-ray tube which is provided in the aforesaid X-ray tube apparatus.
Fig. 4 is a sectional view of a conventional X-ray tube apparatus.

### DETAILED DESCRIPTION OF PREFERRED EMBODIMENTS

Now, the invention will be described in detail by way of an embodiment, referring to the drawings.

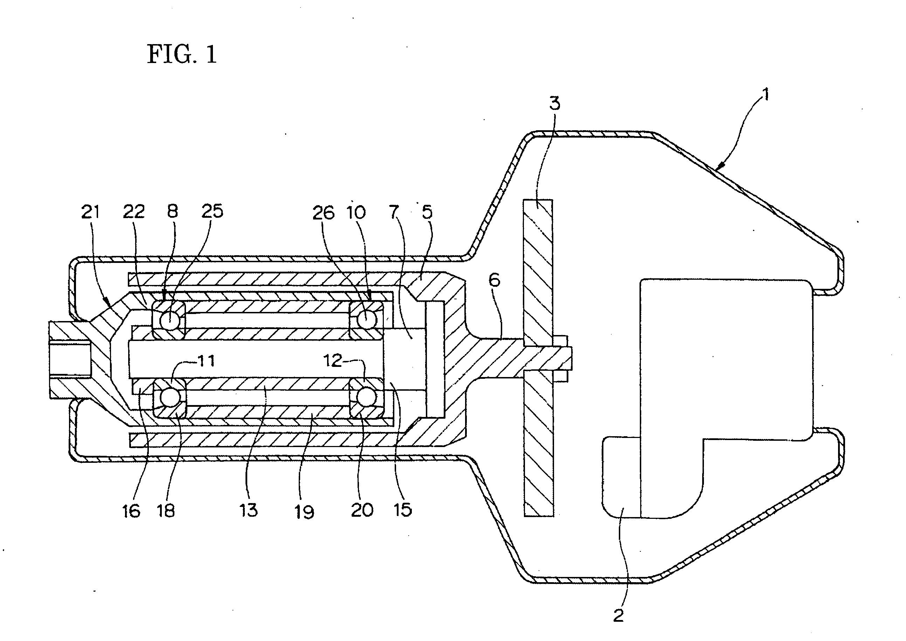

An X-ray tube apparatus in an embodiment according to the invention is shown in Fig. 1. This X-ray tube apparatus includes a vacuum container 1 formed of X-ray transmissive material such as glass, and an electron gun 2 and a target 3 which are arranged in the vacuum container 1 so as to be opposed to each other. The target 3 is fixed to an axial projection 6 of a first tube member 5. A shaft member 7 is fixed to an inner diameter side of the first tube member 5, thereby to constitute a rotary portion including the shaft member 7 and the first tube member 5.

A first rolling bearing 8 and a second rolling bearing 10 as the rolling bearings for the X-ray tube are fitted to the shaft member 7 in a manner spaced from each other for a determined distance in the axial direction. A spacer 13 fitted to the shaft member 7 is interposed between an inner ring 11 of the first rolling bearing 8 and an inner ring 12 of the second rolling bearing 10. The inner ring 12 is clamped between a stepped part 15 of the shaft member 7 and the spacer 13, whereby position of the inner ring 12 is restricted in the axial direction. Moreover, the inner ring 11 is clamped between an annular member 16 which is fixed to an end portion of the shaft member 7 and the spacer 13, whereby position of the inner ring 11 is restricted in the axial direction.

An outer ring 18 of the first rolling bearing 8 and an outer ring 20 of the second rolling bearing 10 are fitted to an inner peripheral surface of a second tube member 21 as a fixed portion. A spacer 19 is interposed between the outer ring 18 and the outer ring 20. The outer ring 18 is clamped between the spacer 19 and a stepped part 22 of the second tube member 21 from both sides in the axial direction, whereby position of the outer ring 18 is restricted in the axial direction. As shown in Fig. 1, a distance between the first rolling bearing 8 and the target 3 is longer than a distance between the second rolling bearing 10 and the target 3.

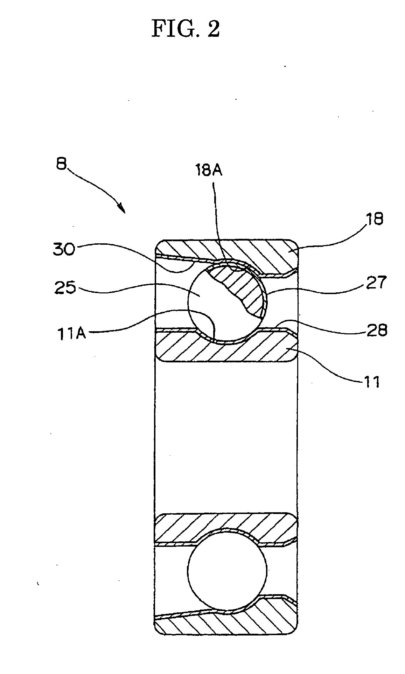

Then, referring to Fig. 2, the aforesaid first rolling bearing 8 will be described. This first rolling bearing 8 is an angular ball bearing, in which the inner ring 11 and the outer ring 18 are formed of SKH steel (high speed tool steel, for example, JIS standard SKH4). It is to be noted that in place of the SKH steel, the inner ring 11 and the outer ring 18 may be formed of steel material such as JIS standard SUS440C, SUS630, SUS304, AISI standard M50, etc. Balls 25 are formed of ceramic. As this ceramic, it is possible to employ silicon nitride, silicon carbide, zirconia, alumina, etc. Moreover, a silver coating 27 as an example of a coating having electrical conductivity is formed on a surface of at least one ball 25. As the coating having electrical conductivity, it is possible to employ copper coating, lead coating, for example, besides the silver coating. Further, concerning the other balls 25 except the aforesaid ball 25 on which the coating having electrical conductivity is formed, it is desirable that a film formed of layer compound such as molybdenum disulfide may be formed on their surfaces as a lubricant.

In addition, an ion nitriding layer 28 is formed on a raceway surface 11A of the inner ring 11, and an ion nitriding layer 30 is formed on a raceway surface 18A of the outer ring 18. It is to be noted that thicknesses of the ion nitriding layers 28, 30 and the silver coating 27 are shown exaggeratedly in Fig. 2.

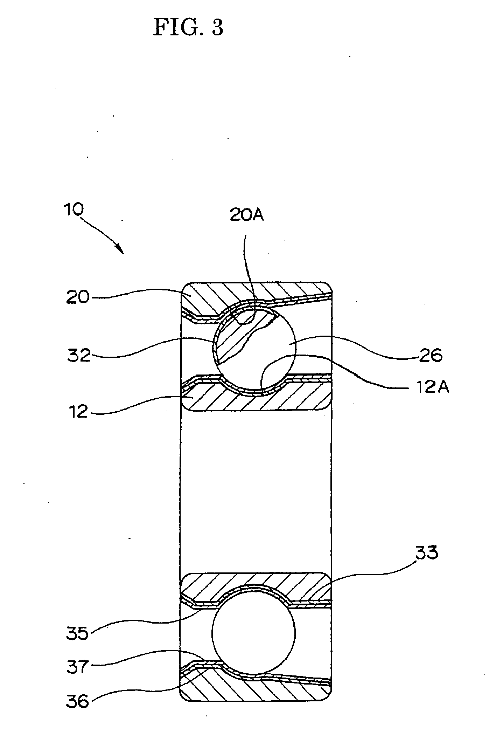

Then, referring to Fig. 3, the aforesaid second rolling bearing 10 will be described. This second rolling bearing 10 is an angular ball bearing, in which the inner ring 12 and the outer ring 20 are formed of SKH steel (high speed tool steel, for example, JIS standard SKH4). It is to be noted that in place of the SKH steel, the inner ring 12 and the outer ring 20 may be formed of steel material such as JIS standard SUS440C, SUS630, SUS304, AISI standard M50, etc. Balls 26 are formed of ceramic. Moreover, a silver coating 32 as an example of a coating having electrical conductivity is formed on a surface of at least one ball 26. An ion nitriding layer 33 and a diamond-like carbon film 35 are formed successively on a raceway surface 12A of the inner ring 12. Moreover, an ion nitiring layer 36 and a diamond-like carbon film 37 are successively formed on a raceway surface 20A of the outer ring 20. The diamond-like carbon film is also called as a DLC (Diamond Like Carbon) film.

In the X-ray tube apparatus having the above described structure, the first tube member 5 as the rotary portion is rotated with respect to the second tube member 21 as the fixed portion, by a rotary magnetic field generated from a coil (not shown) which is provided outside the vacuum container 1. As the results, the target 3 is rotated, and electrons discharged from the electron gun 2 come into collision against the target 3 thereby to generate X-rays.

In this embodiment, the ion nitriding layer 28 is formed on the raceway surface 11A of the inner ring 11 and the ion nitiriding layer 30 is formed on the raceway surface 18A of the outer ring 18, in the aforesaid first rolling bearing 8. As the results, surface hardness of the raceway surface 11A of the inner ring 11 and the raceway surface 18A of the outer ring 18 is enhanced, whereby the abrasion resistance can be improved.

In the aforesaid second rolling bearing 10, the ion nitriding layer 33 and the diamond-like carbon film 35 are formed successively on the raceway surface 12A of the inner ring 12, and the ion nitiring layer 36 and the diamond-like carbon film 37 are successively formed on the raceway surface 20A of the outer ring 20. Accordingly, in this embodiment, in the second rolling bearing 10 which is positioned closer to the target 3 out of the two rows of the rolling bearings 8 and 10, the surface hardness of the raceway surface 12A of the inner ring 12 and the raceway surface 20A of the outer ring 20 is particularly enhanced because of a double hardening structure including the ion nitiriding layers 33, 36 and the diamond-like carbon films 35, 37. As the results, the abrasion resistance of the second rolling bearing 10 which is subjected to higher temperature than the first rolling bearing 8, because the second rolling bearing 10 is positioned closer to the target 3 than the first rolling bearing 8, can be made higher than the abrasion resistance of the first rolling bearing 8. Therefore, according to this embodiment, life of the first rolling bearing 8 and life of the second rolling bearing 10 are balanced, and hence, the useful life of the X-ray tube apparatus can be prolonged.

Moreover, according to the X-ray tube apparatus in this embodiment, because the balls 25, 26 as the rolling elements are formed of ceramic, decrease of centrifugal force, reduction of noises, and enhancement of burning-out resistance can be achieved. Further, the silver coatings 27, 32 as one example of the coating having electrical conductivity are formed on the rolling surfaces of at least one of the balls 25 formed of ceramic and at least one of the balls 26 formed of ceramic. As the results, electrical conductivity between the outer rings 18, 20 and the inner rings 11, 12 can be secured, and also, electrical conductivity between the first tube member 5 as the rotary portion which is fixed to the target 3 and the second tube member 21 as the fixed portion can be secured.

In the above described embodiment, the ion nitriding layers 28, 30 are formed on the raceway surface 11A of the inner ring 11 and the raceway surface 18A of the outer ring 18 in the first rolling bearing 8. However, it is possible to form the ion nitiriding layer on either one of the raceway surface 11A of the inner ring 11 and the raceway surface 18A of the outer ring 18. Moreover, in the above described embodiment, the double hardening structures including the ion nitriding layers and the diamond-like carbon films are formed on the raceway surface 12A of the inner ring 12 and the raceway surface 20A of the outer ring 20 in the second rolling bearing 10. However, it is possible to form the double hardening structure including the ion nitriding layer and the diamond-like carbon film on either one of the raceway surface 12A of the inner ring 12 and the raceway surface 20A of the outer ring 20. Further, although in the above described embodiment, all the balls 25 of the first rolling bearing 8 and all the balls 26 of the second rolling bearing 10 are formed of ceramic, all the balls 25 and 26 may be formed of steel (for example, SKH steel) . In this case, it is desirable to form an ion nitriding layer on the surfaces of the balls 25. Also in this case, it is desirable to form an ion nitriding layer and a diamond-like carbon film successively on the surfaces of the balls 26. Still further, in the above describe embodiment, all the balls 25 of the first rolling bearing 8 and all the balls 26 of the second rolling bearing 10 are formed of ceramic. However, it is possible that at least one of the balls 25 is formed of ceramic, while all the other balls 25 except this ceramic ball 25 is formed of steel (for example, SKH steel) . In short, the balls 25 formed of ceramic and the balls 25 formed of steel may be mixed. Moreover, it is possible that at least one of the balls 26 is formed of ceramic, while all the other balls 26 except this ceramic ball 26 is formed of steel (for example, SKH steel) . In short, the balls 26 formed of ceramic and the balls 26 formed of steel maybe mixed. In this case, decrease of the centrifugal force, reduction of noises and enhancement of burning-out resistance canbe achieved with the balls 25, 26 formed of ceramic, and at the same time, electrical conductivity between the outer rings 18, 20 and the inner rings 11, 12 can be secured with the balls 25, 26 formed of steel, whereby electrical conductivity between the rotary portion (the first tube member 5) fixed to the target 3 and the fixed portion (the second tube member 21) can be secured.

Moreover, in the above described embodiment, the first and second rolling bearings 8, 10 are angular ball bearings. However, it is possible to apply this invention to bearings of various other types such as a deep groove ball bearing, a three point contact ball bearing, a cylindrical roller bearing, a tapered roller bearing, etc.

## Claims

1. A rolling bearing for an X-ray tube which is provided between a rotary portion fixed to a target in an X-ray tube and a fixed portion for supporting the rotary portion, the rolling bearing comprising:
an inner ring;
an outer ring; and
rolling elements rollably disposed between the inner and outer rings,
wherein an ion nitriding layer is formed on at least one of a raceway surface of the inner ring, a raceway surface of the outer ring, and rolling surfaces of the rolling elements.

2. An X-ray tube apparatus comprising:
a target in an X-ray tube;
a rotary portion fixed to the target;
a fixed portion for supporting the rotary portion,
a first rolling bearing which is the rolling bearing according to claim 1 and is arranged between the rotary portion and the fixed portion; and
a second rolling bearing that is arranged spaced apart from the first rolling bearing in an axial direction thereof and between the rotary portion and the fixed portion and includes an inner ring, an outer ring, and rolling elements rollably disposed between the inner and outer rings, in which an ion nitriding layer and a diamond-like carbon film are successively formed on at least either one of a raceway surface of the inner ring, a raceway surface of the outer ring, and rolling surfaces of the rolling elements,
wherein a distance between the first rolling bearing and the target is longer than a distance between the second rolling bearing and the target.

3. The X-ray tube apparatus according to claim 2, wherein at least one of the rolling elements of the first rolling bearing and rolling elements of the secondrollingbearinghas electrical conductivity.

4. The X-ray tube apparatus according to claim 3, wherein
at least one of the rolling elements of the first rolling bearing and the rolling elements of the second rolling bearing is formed of ceramic, and
at least one of the rolling elements of the first rolling bearing and the rolling elements of the second rolling bearing is formed of steel.
